# EUROPEAN PATENT APPLICATION

(11) **EP 4 524 845 A1**
(43) Date of publication of application: **19.03.2025**
(21) Application number: 23000123.2
(22) Date of filing: 12.09.2023
(51) Int. Cl.: G06Q 10/0631, G06Q 30/01, G06Q 50/40

(54) **METHOD FOR IDENTIFYING SERVICE DISRUPTIONS RELATED TO SCHEDULED FLIGHTS**

(71) Applicant: Italia Rimborso S.r.l., 91100 Trapani (IT)
(72) Inventor: The designation of the inventor has not yet been filed
(74) Representative: Dalla Rosa, Silvia

(57) **Abstract**

A method for identifying service disruptions related to scheduled flights, which method being suitable for examining a plurality of flights to verify their arrival time, comprises for each examined flight, one or more steps for acquiring data relating to a or more of these kinds of data:
- weather conditions along the route associated with the examined flight;
- air traffic relating to the departure and arrival airports of the examined flight;
- real-time flight information;
wherein said data are analyzed using a machine learning system suitable of predicting any delay in the arrival time or cancellation of the flight.

## Description

### Technical Field

The present invention finds application in the sector of data management systems and particularly has as its object a method for identifying service disruptions related to scheduled flights, such as delays and cancellations, to simplify the management of any refunds in favour of passengers.

### State of the art

As known, total or partial refunds of the costs of airline tickets due to service disruptions, such as severe delays of scheduled flights or cancellations of the flight itself, are related to multiple factors, not all of which are directly linked to the behaviour of the air carrier.

In fact, in evaluating the actual right to reimbursement for passengers on a scheduled flight it is necessary to take into account both the causes directly attributable to non-optimal management by the air carrier and the so-called causes of force majeure or extraordinary circumstances, i.e. all those impediments not directly attributable to the air carrier, such as bad weather conditions, strikes, birdstrikes.

Currently, the management of refunds is a complex operation which requires the passenger, when the disruption occurs, to contact the carrier, directly or through intermediaries such as consumer associations or specialized service companies, to request a refund.

The carrier, in turn, will verify the reasons for the disruption and provide a refund if the conditions exist.

However, this procedure often leads to disputes between the parties, due to the fact that the causes of the service disruption not always is clearly attributable to the carrier. Furthermore, the procedure for verifying the causes of the service disruption is a procedure that always starts after the occurrence of the event with the consequence that the passenger may be induced not to proceed with the request to avoid delays related to these checks.

The state of the art presents some solutions that aim to predict the delay in arrival of scheduled flights.

For example, US2005/0071206 describes a method for managing flight delays for the purpose of rescheduling them; this method considers as variables both weather forecasts and data relating to the actual capacity of the carrier.

US10810501 uses machine learning to predict the performance of an aircraft based on the acquisition of data collected during pre-flight and in-flight analyses of the aircraft. CN109492334 describes a method for predicting aircraft landing delays using machine learning that takes into account both historical data and weather-related or non-weather-related information.

However, none of these methods is suitable to take into account all the variables to be taken into consideration when it is necessary to evaluate the responsibility for the service disruption in order to provide the right to reimbursement in favour of the passengers of the flight.

Furthermore, EP3467734 describes a system for estimating the arrival time of an aircraft which operates through the analysis of historical data relating to departure and arrival times at airports and whose aim is not to determine the right to reimbursement. This data is then integrated with data relating to the weather and traffic at the departure and arrival airports.

However, in determining the right to reimbursement related to any delay due to the delay of a scheduled flight, it is essential to understand whether the carrier is responsible for the disservice.

The system disclosed in the last cited document only takes into consideration causes of the delay which are not attributable to the carrier, so it will not be possible to understand whether any delay is also the fault of the carrier itself, not allowing the right to reimbursement to be determined.

Similarly, WO2020240177 describes a computer-implemented system and method for predicting the arrival time of a flight of a given aircraft, between an origin airport and a destination airport, based on a number of characteristics, also not having among its objectives the determination of passengers' right to reimbursement.

In particular, the method involves determining the delay by dividing the route into several sections relating to departure phase, flight cruise and landing phase and determining the expected arrival time of the flight at the destination airport by adding the expected time delay of the flight departure time, the expected time duration of the flight during cruise and the expected time duration of the flight in the landing.

Even in this case, however, all the variables that can cause the delay are not taken into account in the various stages of estimating the delay.

Last but not least, all the known methodologies carry out an evaluation of the causes of the delay, in order to define whether the service disruption is attributable to the carrier or to causes of force majeure, only at the conclusion of the flight and therefore after the disservice has occurred.

Therefore, any refund requests can only be managed after the arrival of the aircraft and the verification of the causes, with the consequence that the operator responsible for managing refunds may have to deal with a multiplicity of requests in a short period of time, with obvious management difficulties.

### Scope of the invention

The object of the present invention is to overcome the above-mentioned drawbacks, providing a method for identifying service disruptions related to scheduled flights which allows the occurrence of the disruption to be predicted.

A particular object is to provide a system and a method that allow to identify and classify all the causes that determine the delay, whether they are due to causes not attributable to the carrier or are instead the responsibility of the carrier itself, in order to determine the right to reimbursement.

A particular object is to provide such a method which allows quicker management of the reimbursement of flight ticket costs.

Yet another particular object is to provide such a method which allows the right to reimbursement to be determined in the preventive phase and which allows the possibility of a service disruption to occur on the basis of estimates based on service disruptions which occurred in a previous observation time.

These objects, as well as others that will become more apparent hereinafter, are achieved by a method for identifying service disruptions related to scheduled flights which, according to claim 1, is suitable for examining a plurality of flights to verify their arrival time and provides, for each examined flight, the execution of one or more steps of data acquisition relating to one or more of these kinds of data :
- weather conditions along the route associated with the examined flight,
- air traffic relating to the departure and arrival airports of the examined flight;
- real-time flight information;
wherein said data are analyzed using a machine learning system suitable to predict any delay in the arrival time or cancellation of the flight.

Furthermore, the machine learning system will also evaluate, through GPS monitoring of the aircraft associated with the examined flight, any stall times of the aircraft prior to the time of the service disruption, and the presence of reports of events related to the examined flight, such as birdstrike reporting.

The method thus implemented is not limited to verifying the service disruption, for example by certifying the cancellation of the flight or verifying that the actual arrival time is delayed compared to the scheduled one by a longer time than the maximum expected in order not to proceed with the refund.

On the contrary, this method will first of all allow to establish whether the service disruption is directly attributable to the carrier, so as to be liable for reimbursement to passengers.

Furthermore, the method, thanks to the use of machine learning, will allow predictions to be made regarding the presence of inefficiencies subject to reimbursement in real time, in order to allow faster and more efficient management of reimbursement, allowing users to know immediately if they are entitled to a refund.

Advantageous embodiments of the invention are obtained in accordance with the dependent claims.

### Best modes of carrying out the invention

The method according to the present invention has the object of examining all scheduled flights within a predetermined area, for example within the territory managed by a specific control authority, which may be either regional or national or also international, in order to identify possible service disruptions related to these scheduled flights, which may be delays or cancellations of the flight itself.

In particular, the method involves the examination of a plurality of scheduled flights to verify their arrival time, as well as their actual performance. The flights examined may be examined in a correlated manner, i.e. considering the factors of each flight that can affect other flights, or independently.

For each examined flight, the method carries out one or more steps of data acquisition relating to one or more of these kinds of data:
- weather and/or environmental conditions along the route associated with the examined flight;
- air traffic relating to the departure and arrival airports of the examined flight,
- real-time flight information;

All data are analyzed using a machine learning system designed to predict any delay in arrival time or flight cancellation.

Furthermore, the machine learning system is also suitable to classify the above data to determine whether there are causes attributable to the carrier responsible for the examined flight or causes that are not attributable so as to determine whether the service disruption is attributable or not to the carrier responsible for the examined flight, defining whether or not passengers on that flight are entitled to a refund. From an operational point of view, the machine learning system, for each examined flight, considers the METAR data, i.e. the code strings that represent the weather in relation to a given place and at a specific time.

Furthermore, it will verify whether at the moment examined there are other flights arriving or departing with considerable delays, i.e. delays exceeding a pre-set threshold which could, for example, be the one after which a refund is potentially applicable to passengers and which depends on the regulation applied by the specific supervisory authority.

The machine learning system also checks whether similar service disruptions have occurred at the departure airport and also whether the aircraft associated with the examined flight has possibly accumulated delays from previous flights due to other possible conditions.

In addition to checks on the departure and arrival airports of the particular flight examined, the system may also acquire and process data relating to all the airports of a specific geographical area, so as to analyze the occurrence of service disruptions related to further flights and predict with greater probability the possible occurrence of the service disruption and its attributability to the carrier.

The method also comprises a GPS monitoring step of the aircraft associated with the examined flight.

For example, flight data may be retrieved via tracking systems accessible via the internet.

The system will thus detect the flights, identifying the flight number, the route, the airline, the aircraft license plate, the status of the flight with any actual arrival time. In case of less than optimal weather conditions, the company analyzes whether the pilot is authorized to land.

Other variables that can positively or negatively influence the duration of the flight, such as, for example, the presence of long wind corridors the route itself, may be evaluated among the meteorological and environmental conditions, not only the meteorological conditions along the examined route.

The system also proceeds to analyze the conditions of the departure and arrival airports to exclude causes that may cause service disruption but which are not attributable to the carrier, such as the presence of strikes or the possible presence of the airport on a blacklist.

After obtaining the information on the flight, if there are conditions for a potential service disruption requiring reimbursement, the aircraft is analyzed based on the license plate.

In particular, the analysis of the stall times of the aircraft prior to the time of the verified outage is carried out, so as to establish how much time it is necessary to go backwards to verify the presence of a propagated delay.

Once the stall has been identified, the system also checks whether there are reports of birdstrikes or other anomalous events related to the flight examined and which could be causes of delay not attributable to the responsibility of the carrier.

All the above checks will allow to have a good probability that the responsibility for that service disruption on that flight can be attributed to the air carrier, allowing the service company that uses the method to evaluate whether the reimbursement requests may be processed, thus providing for the right to reimbursement/compensation.

Furthermore, based on the outcome of this first analysis, the system will establish the value of the financial compensation due which is processed in relation to the kilometer length of the air route.

Last but not least, the system will allow a user to access the above information in real time in order to verify the presence of inefficiencies subject to reimbursement for a flight in progress, even if not yet completed.

At the same time, the system will also allow the analysis of data from flights already completed and relating to previous periods of time, for example up to two years previously, so as to verify whether for a flight already completed there was the right to a refund/compensation.

According to a further particularly advantageous and innovative aspect, the method may comprise a phase a step of predicting a disruption related to a specific aircraft and/or route in order to obtain a probability that this service disruption will occur for a specific aircraft and/or for a specific route.

In this way it will be possible to evaluate the causes that could lead to this service disruption to allow the person authorized to manage refunds to know in advance what the potential refund requests are, to manage them quickly.

In particular, the forecasting step will be conducted by analyzing any delays associated with the same aircraft and/or the relevant route which occurred in a period of time prior to the departure or arrival time of the flight examined for the aircraft, also considering statistics data relating to failures or non-conformities occurring for the same aircraft. Preferably, the earlier period of time examined will be no more than 24 hours from the departure or arrival time of the aircraft.

In this way, by recording aircraft disruptions linked to the responsibility of the air carrier, the managing entity may mark the aircraft's license plate and record the flight history, i.e. in which weather conditions it has traveled in the past, how many hours of flight it has flown, as well as that all information related to the life of the aircraft, so as to record all the variables that have affected the potential failure of the aircraft. This will also allow to predict possible failures on all those aircraft that have the same production factory, the same age of life, have flown the same hours and in those weather conditions, also allowing to predict potential minor failures and allow preventive actions aimed at avoiding them.

## Claims

1. A method for identifying service disruptions related to scheduled flights, which method being suitable for examining a plurality of flights to verify the arrival time thereof, and which comprises, for each examined flight, one or more acquisition steps of acquisition of data relating to the examined flight and wherein said data are analyzed using a machine learning system suitable to predict any delay in the arrival time or cancellation of the flight;
**characterized in that** said machine learning system is suitable to evaluate whether said delay or cancellation is attributable to the carrier responsible for the flight examined through GPS monitoring of the aircraft associated with the flight examined, analysis of any stall times of the aircraft associated with the flight examined prior to the time of the verified disruption and/or verify the presence of reports of events related to the examined flight.

2. Method as claimed in claim 1, **characterized in that** said data relate to one or more of these kinds of data:
- weather conditions along the route associated with the examined flight;
- air traffic relating to the departure and arrival airports of the examined flight;
- real-time flight information;

3. Method as claimed in claim 1 or 2, **characterized in that** said events related to the examined flight are reports of birdstrikes or other anomalous events.

4. Method as claimed in any preceding claim, **characterized in that** said data are acquired both in real time and in relation to a previous period of predetermined duration.

5. Method as claimed in any preceding claim, **characterized in that** said machine learning system is suitable of acquiring and processing data relating to all airports in a specific geographical area to analyze service disruptions related to further flights.

6. Method as claimed in any preceding claim, **characterized in that** the flight data are recovered from tracking systems accessible via the internet.

7. Method as claimed in any preceding claim, **characterized by** carrying out a step of forecasting of a service disruption related to an aircraft by analyzing any delays associated with the same aircraft and/or the related route which occurred in a period of time prior to the departure or arrival time of the flight examined for the aircraft.

8. Method as claimed in claim 7, **characterized in that** said predetermined prior time period is equal to 24 hours.
